# EUROPEAN PATENT SPECIFICATION

(11) **EP 3 053 972 B1**
(45) Date of publication and mention of the grant of the patent: **21.08.2024**
(21) Application number: 16153658.6
(22) Date of filing: 01.02.2016
(51) Int. Cl.: C09D 11/328, C09D 11/38, C09D 11/40, D06P 5/30, C09D 11/54

(54) **PENETRANT LIQUID FOR INK JET TEXTILE PRINTING**
EINDRINGFLÜSSIGKEIT FÜR TINTENSTRAHLTEXTILDRUCK
LIQUIDE PÉNÉTRANT POUR IMPRESSION À JET D'ENCRE SUR TEXTILE

(30) Priority: 05.02.2015 JP 2015021558
(43) Date of publication of application: 10.08.2016
(73) Proprietor: Seiko Epson Corporation, Shinjuku-ku Tokyo (JP)
(72) Inventor: OKI, Yasuhiro, Suwa-shi, Nagano 392-8502 (JP); KOMATSU, Hidehiko, Suwa-shi, Nagano 392-8502 (JP)
(74) Representative: Lewis Silkin LLP

(56) References cited:
- EP-A1- 2 405 055
- EP-A1- 2 537 679
- WO-A1-2008/019075
- US-A1- 2012 320 124

## Description

### BACKGROUND

### 1. Technical Field

The present invention relates to a penetrant liquid for inkjet textile printing.

### 2. Related Art

An inkjet recording method allows a relatively simple apparatus to record a high-resolution image, and use of the ink jet recording method is thus rapidly increasing in a variety of fields. Various studies on ink jet textile printing methods have been made under such circumstances. JP-A-2001-89982, for example, discloses an inkjet textile printing method which performs printing onto a fabric by an ink jet method and which aims to enable ink to penetrate to the back of a fabric, to give less blur, to be printed at a similar density on the front surface and the back surface of the fabric, and to easily produce an intricate pattern by the ink jet method. The ink jet textile method uses an ink containing 41 to 95% by weight of organic solvents based on the weight of the ink.

The method according to JP-A-2001-89982, however, provides printed materials all having a low dye concentration difference between the front side and the back side. Accordingly, in consideration of a wide variety of applications of ink compositions, that is, in the case where printed materials having a dye concentration difference between the front side and the back side are desired, a change in ink compositions is required. EP2537679 discloses an ink set for textile printing based on a penetrant liquid and a dye based ink.

### SUMMARY

An advantage of some aspects of the invention is that use of a penetrant liquid for ink jet textile printing in combination with an ink composition comprising a dye to suppress a difference in coloring property between the front and back surfaces of printed materials is provided.

The penetrant liquids used in the aspects of the invention have a certain composition to confer the above-described advantage.

The present invention provides use of a penetrant liquid for ink jet textile printing in combination with an ink composition comprising a dye to provide a printed textile material having a low difference in dye concentration between the front side and the back side of the printed material as defined in appended claim 1.

The present invention further provides an ink set as defined in appended claim 7 and a textile printing method as defined in appended claim 8.

Preferred aspects of the invention are set out in the dependent claims.

### DESCRIPTION OF EXEMPLARY EMBODIMENTS

Embodiments of the invention (hereinafter referred to as "the embodiments") will hereinafter be described in detail. The invention is not limited to the embodiments and various modifications can be made without departing from the scope of the invention.

### Penetrant Liquid for ink Jet Textile Printing

A penetrant liquid for inkjet textile printing of the embodiment includes a compound containing a lactam structure and water, in which the content of the compound containing a lactam structure is 20% by mass or more.

An ink composition having high penetrability may be used to obtain a printed material having a low dye concentration difference between the front side and the back side. Using the above-described ink composition provides, however, printed materials all having a low dye concentration difference between the front side and the back side and thus a change in the ink compositions is required to obtain a printed material having a high dye concentration difference between the front side and the back side. Changing the ink composition is, however, generally difficult due to limitations regarding the number of cartridges disposed in a recording apparatus and many technical limitations regarding the replacement of ink compositions in a cartridge.

In view of the above, it is thought that it is practical to obtain either a printed material having a low dye concentration difference between the front side and the back side or a printed material having a high dye concentration difference between the front side and the back side as needed by using penetrant liquid. Specifically, it is thought that an ink composition used with a penetrant liquid enables a printed material having a low dye concentration difference between the front side and the back side to be obtained, and the same ink composition used without a penetrant liquid enables a printed material having a high dye concentration difference between the front side and the back side to be obtained. Various printed materials can thus be obtained by use or non-use of a penetrant liquid.

Printed materials having a low dye concentration difference between the front side and the back side with desirable coloring property may, however, not always be obtained by using a penetrant liquid depending on the recording media used such as fabrics formed of various types of fibers. This is related to, for example, the combinations of coloring components (an acidic dye, a basic dye, a reactive dye, or the like) of ink compositions and the types of fibers (natural fibers such as silk, synthetic fibers such as polyester, specifically, properties and functional groups of fiber surfaces) of fabrics. Using a penetrant liquid may contribute to coloring deterioration depending on the combinations of coloring components of ink compositions and the types of fibers of fabrics.

A penetrant liquid for inkjet textile printing of the embodiment can, however, provide printed materials having a low dye concentration difference between the front side and the back side with desirable coloring property using combinations of various ink compositions and recording media because of the above-described structure, specifically, the structure including a certain amount of a compound containing a lactam structure. Furthermore, the penetrant liquid can provide either a printed material having a low dye concentration difference between the front side and the back side or a printed material having a high dye concentration difference between the front side and the back side by use or non-use of the penetrant liquid as needed. Each component will hereinafter be described in detail.

### Compound containing Lactam Structure

A compound containing a lactam structure, for example, preferably includes, but is not limited to, at least one compound selected from the group consisting of 2-pyrrolidone, 2-azetidinone, 2-piperidone, ε-caprolactam, 4-ethyl-2-azetidinone, N-methyl-2-pyrrolidone, and 3-amino-2-piperidone and more preferably is 2-pyrrolidone. In other words, the compound may be two or more compounds. Using the above-described compound containing a lactam structure tends to result in printed materials having a low dye concentration difference between the front side and the back side with a desirable coloring property.

The content of the compound containing a lactam structure is 20% by mass or more, preferably 25 to 55% by mass, more preferably 30 to 50% by mass based on 100% by mass of a penetrant liquid for ink jet textile printing. When the content of the compound containing a lactam structure is 20% by mass or more, printed materials having a low dye concentration difference between the front side and the back side with a desirable coloring property can be provided. When the content of the compound containing a lactam structure is 55% by mass or less, the property of attacking (dissolution, swelling, or the like) constituent materials of a print head or a flow channel can be suppressed and discharge reliability can be provided.

### Water

Water may be, for example, water in which ionic impurities have been removed as much as possible, such as pure water or ultrapure water, examples of which include ion exchanged water, ultrafiltration water, reverse osmosis purified water, distilled water, or the like. When water sterilized by irradiation with an ultraviolet ray, addition of hydrogen peroxide, or the like is used, growth of fungi and bacteria can be prevented during long-term storage of a penetrant liquid for ink jet textile printing. When using the above-described water, storage stability tends to be further improved.

The content of water is preferably 30 to 80% by mass, more preferably 35 to 75% by mass, further more preferably 40 to 70% by mass based on 100% by mass of a penetrant liquid for ink jet textile printing.

### Organic Solvent

A penetrant liquid for inkjet textile printing may further include an organic solvent. Examples of the organic solvent include, but are not limited to, a glycol ether-based solvent, a nitrogen-containing solvent, an aprotic polar solvent, an alkyl polyol solvent, and a monoalcohol-based solvent. The organic solvent may be used alone, or two or more of organic solvents may be used in combination.

The penetrant liquid for inkjet textile printing preferably includes at least one organic solvent selected from the group consisting of the glycol ether having a boiling point of 260°C or lower and the alkyl polyol having a boiling point of 260°C or lower. When the above-described solvent is included, discharge reliability such as the property of recovering from clogging can be improved without deterioration of the coloring property.

### Glycol Ether having Boiling Point of 260°C or Lower

Examples of a glycol ether having a boiling point of 260°C or lower include, but are not limited to, dipropylene glycol dimethyl ether (171°C), diethylene glycol ethyl methyl ether (176°C), diethylene glycol isopropyl methyl ether (179°C), dipropylene glycol monomethyl ether (188°C), diethylene glycol diethyl ether (189°C), diethylene glycol monomethyl ether (194°C), diethylene glycol butyl methyl ether (212°C), tripropylene glycol dimethyl ether (215°C), triethylene glycol dimethyl ether (216°C), diethylene glycol monobutyl ether (230°C), dipropylene glycol (230°C), diethylene glycol (245°C), ethylene glycol monophenyl ether (245°C), triethylene glycol monomethyl ether (249°C), and diethylene glycol dibutyl ether (256°C) (numerals within parentheses represent the standard boiling point). Diethylene glycol monobutyl ether (a boiling point of 230°C) and triethylene glycol monomethyl ether (a boiling point of 230°C) are more preferred. When a glycol ether is used, the coloring property of a back surface of a printed material tends to be further improved. A glycol ether may be used alone, or two or more glycol ethers may be used in combination.

The boiling point of the glycol ether is preferably 175 to 260°C, more preferably 200 to 260°C, further more preferably 225 to 260°C. When the boiling point of the glycol ether is within the above-described ranges, the difference in the coloring property between the front and back surfaces of a printed material tends to be further reduced.

The content of the glycol ether having a boiling point of 260°C or lower is preferably 1.0 to 15% by mass, more preferably 1.5 to 10% by mass, further more preferably 2.5 to 5.0% by mass based on 100% by mass of a penetrant liquid for ink jet textile printing. When the content of the glycol ether having a boiling point of 260°C or lower is 1.0% by mass or more, continuous discharging stability during discharge of a penetrant from an ink jet nozzle tends to be further improved. When the content of the glycol ether having a boiling point of 260°C or lower is 15% by mass or less, the response to a driving waveform of an ink jet head tends to be further improved and discharge stability tends to be further improved.

### Alkyl Polyol having Boiling Point of 260°C or lower

Examples of an alkyl polyol having a boiling point of 260°C or lower include, but are not limited to, 1,2-pentanediol (104°C), propylene glycol (188°C), 1,2-butanediol (193°C), ethylene glycol (197°C), 1,3-butanediol (207°C), 1,3-propanediol (214°C), 1,2-hexanediol (223°C), 1,4-butanediol (230°C), 2-methyl-2-propyl-1,3-propanediol (230°C), 1,5-pentanediol (242°C), 2-ethyl-1,3-hexanediol (244°C), 3-methyl-1,5-pentanediol (249°C), and 1,6-hexanediol (250°C) (numerals within parentheses represent the standard boiling point). Propylene glycol (188°C), 1,3-butanediol (207°C), and 1,2-hexanediol (223°C) are more preferred. When an alkyl polyol as described above is used, clogging reliability during application of a penetrant liquid by an ink jet method tends to be further improved. An alkyl polyol may be used alone, or two or more alkyl polyols may be used in combination.

The boiling point of the alkyl polyol is preferably 150 to 260°C, more preferably 160 to 255°C, further more preferably 170 to 250°C. When the boiling point of the alkyl polyol is within the above-described ranges, the difference in the coloring property between the front and back surfaces of a printed material tends to be further reduced.

The content of the alkyl polyol having a boiling point of 260°C or lower is preferably 1.0 to 10% by mass, more preferably 2.5 to 7.5% by mass, further more preferably 3.0 to 6.0% by mass based on 100% by mass of a penetrant liquid for ink jet textile printing. When the content of the alkyl polyol having a boiling point of 260°C or lower is 1.0% by mass or more, clogging during discharge of a penetrant from an ink jet nozzle tends to be suppressed. When the content of the alkyl polyol having a boiling point of 260°C or lower is 10% by mass or less, the response to a driving waveform of an ink jet head tends to be further improved and discharge stability tends to be further improved.

The penetrant liquid for ink jet textile printing is preferably substantially free of an organic solvent having a boiling point higher than 260°C. When the penetrant liquid is substantially free of the above-described solvent, the difference in the coloring property between the front and back surfaces of a printed material tends to be further reduced. The term "substantially free" means that the content of an organic solvent having a boiling point of higher than 260°C is preferably 0 to 1.0% by mass, more preferably 0 to 0.050% by mass, further more preferably 0% by mass based on 100% by mass of a penetrant liquid for ink jet textile printing.

Examples of the organic solvent having a boiling point higher than 260°C include, but are not limited to, triethylene glycol monobutyl ether (272°C), triethylene glycol (287°C), and glycerin (290°C) (numerals within parentheses represent the standard boiling points). Surfactant

A penetrant liquid for inkjet textile printing may further include a surfactant. Examples of the surfactant include, but are not limited to, a nonionic surfactant, a cationic surfactant, and an anionic surfactant. A nonionic surfactant is preferred. When a nonionic surfactant is used, discharge stability tends to be further improved.

### Nonionic Surfactant

Examples of a nonionic surfactant include, but are not limited to, a silicone-based surfactant, an acetylene glycol-based surfactant, a polyoxyethylene alkyl ether-based surfactant, a polyoxypropylene alkyl ether-based surfactant, a polycyclic phenyl ether-based surfactant, a sorbitan derivative-based surfactant, and a fluorine-based surfactant. A silicone-based surfactant is preferred. When a silicone-based surfactant is used, penetrability tends to be further improved.

The content of the nonionic surfactant is preferably 0.10 to 1.0% by mass, more preferably 0.20 to 0.75% by mass, further more preferably 0.30 to 0.60% by mass based on 100% by mass of a penetrant liquid for ink jet textile printing. When the content of the nonionic surfactant is 0.10% by mass or more, penetrability tends to be further improved. When the content of the nonionic surfactant is 1.0% by mass or less, a blur can be suppressed. Silicone-Based Surfactant

Examples of a silicone-based surfactant include, but are not limited to, a polysiloxane-based compound and a polyether-modified organosiloxane. Examples of a commercially available silicone-based surfactant include, but are not limited to, BYK-306, BYK-307, BYK-333, BYK-341, BYK-345, BYK-346, BYK-348 (the aforementioned being all trade names, manufactured by BYK Co., Ltd.), KF-351A, KF-352A, KF-353, KF-354L, KF-355A, KF-615A, KF-945, KF-640, KF-642, KF-643, KF-6020, X-22-4515, KF-6011, KF-6012, KF-6015, and KF-6017 (the aforementioned being all trade names, manufactured by Shin-Etsu Chemical Co., Ltd.). A silicone-based surfactant may be used alone, or two or more of silicone-based surfactants mixed together may be used.

The content of the silicone-based surfactant is preferably 0.10 to 1.0% by mass, more preferably 0.20 to 0.75% by mass, further more preferably 0.30 to 0.60% by mass based on 100% by mass of a penetrant liquid for ink jet textile printing. When the content of the silicone-based surfactant is 0.10% by mass or more, penetrability tends to be further improved. When the content of the silicone-based surfactant is 1.0% by mass or less, deterioration of discharge stability tends to be suppressed.

### Other Components

The penetrant liquid for inkjet textile printing can further include ureas, saccharides, a pH-adjusting agent, a chelating agent, an antiseptic, an antirust agent, or other components.

### Textile Printing Method

A textile printing method using a penetrant liquid for ink jet textile printing of the embodiment will hereinafter be described. The textile printing method includes a recording step in which an ink composition containing a dye is applied onto a front surface of a fabric by an ink jet method, and a penetrant liquid applying step in which a penetrant liquid is applied onto the front surface or the back surface of the fabric before or after the above-described recording step.

A printed material having the same record on a front surface and a back surface of a fabric is required in some cases. A method for providing such printed material includes applying a penetrant, which guides an ink composition to penetrate, to a fabric before or after applying the ink composition to the fabric. Some compositions of the penetrant, however, may cause difficulties in printing. The difficulties include coloring deterioration (a fabric is hard to dye), a variation in the coloring property of the front and back surfaces of a printed material due to drying of the penetrant liquid before penetration, or a variation in the coloring property of the front and back surfaces of a printed material due to a penetrant liquid being resistant to dry.

The embodiments can, however, provide printed materials less likely to have coloring deterioration and having less coloring property difference between the front and back surfaces by using a penetrant liquid having a certain composition. The embodiments will hereinafter be described in detail.

### Recording Step

A recording step refers to application of an ink composition containing a dye onto a front surface of a fabric by an ink jet method. Examples of the ink jet method include, but are not limited to, a charge deflection method, a continuous method, an on-demand method (a piezo method, bubble jet (registered trademark) method), and the like.

### ink Composition

An ink composition may contain a dye, a solvent, a surfactant, ureas, saccharides, a pH-adjusting agent, a chelating agent, an antiseptic, an antirust, or other components.

Examples of a dye include, but are not limited to, an acidic dye such as C.I. Acid Yellow, C.I. Acid Red, C.I. Acid Blue, C.I. Acid Orange, C.I. Acid Violet, and C.I. Acid Black; a basic dye such as C.I. Basic Yellow, C.I. Basic Red, C.I. Basic Blue, C.I. Basic Orange, C.I. Basic Violet, and C.I. Basic Black; direct dyes such as C.I. Direct Yellow, C.I. Direct Red, C.I. Direct Blue, C.I. Direct Orange, C.I. Direct Violet, and C.I. Direct Black; a reactive dye such as C.I. Reactive Yellow, C.I. Reactive Red, C.I. Reactive Blue, C.I. Reactive Orange, C.I. Reactive Violet, and C.I. Reactive Black; and a disperse dye such as C.I. Disperse Yellow, C.I. Disperse Red, C.I. Disperse Blue, C.I. Disperse Orange, C.I. Disperse Violet, and C.I. Disperse Black. A dye may be used alone, or two or more dyes may be used in combination.

### Fabric

Examples of a fiber contained in a fabric include, but are not limited to, a natural fiber such as silk, cotton, linen, and wool; a synthetic fiber such as a polyester fiber, a nylon fiber, a triacetate fiber, a diacetate fiber, and a polyamide fiber; and a regenerated fiber such as rayon and the like. A fabric may be formed from one type of fiber or may be a mixed spun containing two or more types of fibers. In particular, a mixed spun fabric of fibers having various penetrabilities can readily provide the effect of the penetrant liquid. The fabric may be any type of fabric such as a woven fabric, a knitted fabric, or a non-woven fabric of the above-described fibers.

Examples of a combination of a fabric and a dye include, but are not limited to, a reactive dye and a fiber containing cellulose as a main component (cotton, linen, rayon, or the like), an acidic dye and silk, wool, or a nylon fiber, a basic dye and an acrylic fiber, direct dyes and cotton, linen, or rayon, and a disperse dye and a polyester fiber. The combinations of the reactive dye and a fiber containing cellulose as a main component, and the acidic dye and silk, wool, or a nylon fiber are preferred. When such combinations are used, differences in the coloring property between the front and back surfaces of a printed material tend to be further suppressed. The combination of a fabric and a dye, however, is not limited to the above-described combinations.

An inkjet textile printing method of the embodiment enables differences in the coloring property between the front and back surfaces of a printed material to be suppressed by using a penetrant liquid described below without adjusting a composition of a penetrant liquid for each fabric.

### Step of Applying Penetrant Liquid

A step of applying a penetrant liquid refers to applying a penetrant liquid onto a front surface or a back surface of a fabric before or after the recording step. Examples of a method of applying the penetrant liquid include, but are not limited to, a roller method, a spray method, and an inkjet method. The inkjet method is preferred because the method enables a penetrant liquid to be applied selectively.

The step of applying a penetrant liquid may be performed before the recording step, after the recording step, or both before and after the recording steps. When the step of applying a penetrant liquid is performed before the recording step, the recording step is preferably performed before the penetrant liquid that has been applied onto a fabric dries. When the step of applying a penetrant liquid is performed after the recording step, the step of applying a penetrant liquid may be performed before or after the ink composition applied onto a fabric dries, and preferably the step of applying a penetrant liquid is performed before an ink composition applied onto a fabric dries. The penetrant liquid may be applied onto a front surface, applied onto a back surface, or applied onto both a front surface and a back surface of a fabric.

### Heating Step

The inkjet textile printing method of the embodiment may further include a heating step for heating a fabric after the recording step and the step of applying a penetrant liquid. Including the heating step enables a dye to further desirably dye a fiber contained in a fabric. Examples of the heating method include, but are not limited to, an HT method (a high temperature steaming method), an HP method (a high pressure steaming method), and a thermosol method.

During the heating step, an ink composition applied surface of a fabric may be pressed or may not be pressed. A heating method without pressing the ink composition applied surface of a fabric includes oven drying (using a conveyor oven, a batch oven, or the like without pressing). Such heating step further improves the efficiency of production of a recording product. Examples of a heating method with pressing the ink composition applied surface of a fabric include, but are not limited to, heat-pressing and wet-on-drying. The term "pressing" refers to applying a pressure to a recording medium through contacting with a solid body.

The temperature during the heating treatment is preferably 80 to 150°C, more preferably 90 to 110°C. When the temperature during the heating treatment is within the above-described range, a dye tends to further desirably dye a fiber contained in a fabric. Cleaning Step

The inkjet textile printing method of the embodiment may further include a cleaning step to clean a fabric after the heating step. The cleaning step effectively removes a dye which has not dyed a fiber. The cleaning step may be performed with, for example, water, and a soaping treatment may optionally be performed. The soaping treatment may be, but is not limited to, a method of washing out an unfixed dye with a heated soap solution.

### ink Set

The ink set of the embodiment includes an ink composition containing a dye and the above-described penetrant liquid for ink jet textile printing.

### Examples

The invention will be described in more detail hereinafter with reference to Examples and Comparative Examples. The Examples should not be construed as limiting the invention in any way.

### Materials for ink Compositions

Major materials used for ink compositions in the following Examples and Comparative Examples are given below.
Dyes
   C.I. Acid Black 172
   C.I. Reactive Black 39
Glycol Ethers
   Triethylene glycol monobutyl ether (standard boiling point 272°C)
   Diethylene glycol monobutyl ether (standard boiling point 230°C)
Alkyl Polyols
   Triethylene glycol (standard boiling point 285°C)
   Diethylene glycol (standard boiling point 245°C)
Nitrogen-Containing Compound
   2-Pyrrolidone (standard boiling point 245°C)
Surfactant
   Olfine PD-002W (a nonionic (an acetylene-based) surfactant, manufactured by Nissin Chemical Industry Co., Ltd.)
Ureas
   Urea
pH-Adjusting Agent
   Triethanolamine
   Tris(hydroxymethyl)aminomethane
Antiseptic
   Proxel XL2 (trade name, manufactured by Arch Chemicals, Inc.)
Preparation of ink Composition 1

Materials of the composition shown in Table 1 below were mixed and stirred sufficiently to obtain ink composition 1. Specifically, the materials were mixed to provide a homogeneous mixture and then filtered with a membrane filter (a pore size of 1 µm) to prepare ink composition 1. The units of numerals are "% by mass" and "Total" represents "100.0% by mass" in Table 1 below.

**Table 1**

| Composition of ink composition 1 | | |
|---|---|---|
| Dye | C.I. Acid Black 172 | 10 |
| Glycol ether | Triethylene glycol monobutyl ether (boiling point 272°C) | 5 |
| Alkyl polyol | Triethylene glycol (boiling point 285°C) | 10 |
| Nitrogen-containing compound | 2-Pyrrolidone (boiling point 245°C) | 5 |
| Surfactant | Olfine PD-002W (nonionic (acetylene-based) surfactant, manufactured by Nissin Chemical Industry Co., Ltd.) | 0.5 |
| Others | Urea | 3.5 |
| | Triethanolamine | 0.5 |
| | Proxel XL2 | 0.3 |
| | Ion exchanged water | balance |
| Total (% by mass) | | 100 |

### Preparation of ink Composition 2

Materials of the composition shown in Table 2 below were mixed and stirred sufficiently to obtain ink composition 2. Specifically, the materials were mixed to provide a homogeneous mixture and then filtered with a membrane filter (a pore size of 1 µm) to prepare ink composition 2. The units of numerals are "% by mass" and "Total" represents "100.0% by mass" in Table 2 below.

**Table 2**

| Composition of ink composition 2 | | |
|---|---|---|
| Dye | C.I. Reactive Black 39 | 15 |
| Glycol ether | Diethylene glycol monobutyl ether (boiling point 230°C) | 2.5 |
| Alkyl polyol | Diethylene glycol (boiling point 245°C) | 5 |
| Nitrogen-containing compound | 2-Pyrrolidone (boiling point 245°C) | 8 |
| Surfactant | Olfine PD-002W (nonionic (acetylene-based) surfactant, manufactured by Nissin Chemical Industry Co., Ltd.) | 0.1 |
| Others | Urea | 3.5 |
| | Trishydroxymethyl aminomethan | 0.5 |
| | Proxel XL2 | 0.3 |
| | Ion exchanged water | balance |
| Total (% by mass) | | 100 |

### Materials for Penetrant Liquid for Ink Jet Textile Printing

Major materials used for a penetrant liquid for ink jet textile printing in the following Examples and Comparative Examples are given below.
Organic Solvents
   Propylene glycol (a boiling point of 188°C)
   Glycerin (a boiling point of 290°C)
   1,3-Butanediol (a boiling point of 207°C)
   1,2-Hexanediol (a boiling point of 223°C)
   Triethylene glycol monobutyl ether (a boiling point of 272°C)
   Diethylene glycol monobutyl ether (a boiling point of 230°C)
   Triethylene glycol monomethyl ether (a boiling point of 230°C)
Compounds containing Lactam Structure
   2-Azetidinone
   2-Pyrrolidone
   2-Piperidone
   ε-Caprolactam
   4-Ethyl-2-azetidinone
   N-Methyl-2-pyrrolidone
   3-Amino-2-piperidone
pH-Adjusting agents
   Isopropanolamine
   Triethanolamine
Surfactants
   Olfine PD002W (an acetylene glycol-based surfactant, manufactured by Nissin Chemical Industry Co., Ltd.)
   Olfine PD570 (a nonionic surfactant, manufactured by Nissin Chemical Industry Co., Ltd.)
   Silface SAG002 (a silicone-based surfactant, manufactured by Nissin Chemical Industry Co., Ltd.)
   BYK 348 (a silicone-based surfactant, manufactured by BYK Co., Ltd.)

### Preparation of Penetrant Liquid for ink Jet Textile Printing

Materials of the compositions shown in Tables 3 and 4 below were mixed and stirred sufficiently to obtain respective penetrant liquids for ink jet textile printing. The units of numerals are "% by mass" and "Total" represents "100.0% by mass" in Tables 3 and 4.

**Table 3**

| | | | Examples | | | | | | | | | | | | | | | |
|---|---|---|---|---|---|---|---|---|---|---|---|---|---|---|---|---|---|---|
| | | | 1 | 2 | 3 | 4 | 5 | 6 | 7 | 8 | 9 | 10 | 11 | 12 | 13 | 14 | 15 | 16 |
| Solvent | Propylene glycol | | | 5 | | | | 3 | 2 | | | 5 | | | | 3 | 2 | |
| | Glycerin | | | | | | | | | | | | | | | | | |
| | 1,3-Butanediol | | | | 5 | | | 2 | | | | | 5 | | | 2 | | |
| | 1,2-Hexanediol | | | | | 5 | | | 3 | | | | | 5 | | | 3 | |
| | Triethylene glycol monobutyl ether | | | | | | 5 | | | | | | | | 5 | | | |
| | Diethylene glycol monobutyl ether | | | | | | | | | 5 | | | | | | | | |
| | Triethylene glycol monomethyl ether | | | | | | | | | | | | | | | | | 5 |
| Compound containing lactam structure | 2-Azetidinone | | | | 30 | | | | | | | | 20 | | | | | |
| | 2-Pyrrolidone | | 40 | | | | | | | | 30 | | | | | | | |
| | 2-Piperidone | | | 40 | | | | | | | | 30 | | | | | | |
| | ε-Caprolactam | | | | | 50 | | | | | | | | 50 | | | | |
| | 4-Ethyl-2-azetidinone | | | | | | 40 | | | 40 | | | | | 30 | | | 30 |
| | N-Methyl-2-pyrrolidone | | | | | | | 40 | | | | | | | | 30 | | |
| | 3-Amino-2-piperidone | | | | | | | | 40 | | | | | | | | 30 | |
| pH-Adjusting agent | Isopropanolamine | | | 0.2 | 0.2 | 0.2 | | | | | | 0.2 | 0.2 | 0.2 | | | | |
| | Triethanolamine | | 0.1 | | | | 0.1 | 0.1 | 0.1 | 0.1 | 0.1 | | | | 0.1 | 0.1 | 0.1 | 0.1 |
| Surfactant | Olfine PD002W | | 0.5 | 0.5 | 0.5 | 0.5 | 0.5 | 0.5 | 0.5 | 0.5 | | 0.5 | | | 0.5 | | | 0.5 |
| | Olfine PD570 (manufactured by Nissin Chemical Industry Co., Ltd.) | | | | | | | | | | 0.5 | | 0.6 | 0.4 | | 0.5 | 0.5 | |
| | Silface SAG002 (manufactured by Nissin Chemical Industry Co., Ltd.) | | | | | | | | | | 0.5 | | 0.6 | | 0.5 | 0.5 | 0.5 | 0.5 |
| | BYK 348 (manufactured by BYK Co., Ltd.) | | | | | | | | | | | 0.5 | | 0.4 | | | | |

| Water | | | balance | balance | balance | balance | balance | balance | balance | balance | balance | balance | balance | balance | balance | balance | balance | balance |
|---|---|---|---|---|---|---|---|---|---|---|---|---|---|---|---|---|---|---|
| | Ink composition 1(acidic dye) | OD value of front surface | 1.54 | 1.54 | 1.56 | 1.55 | 1.56 | 1.56 | 1.55 | 1.56 | 1.55 | 1.55 | 1.57 | 1.53 | 1.54 | 1.56 | 1.56 | 1.56 |
| | | OD value of back surface | 1.50 | 1.51 | 1.52 | 1.53 | 1.53 | 1.52 | 1.52 | 1.53 | 1.49 | 1.50 | 1.54 | 1.49 | 1.50 | 1.52 | 1.51 | 1.51 |
| | Fabric 1 (silk 100%, basis weight 60 g/m²) | OD value difference between front surface and back surface | 0.04 | 0.03 | 0.04 | 0.02 | 0.03 | 0.04 | 0.03 | 0.03 | 0.06 | 0.05 | 0.03 | 0.04 | 0.04 | 0.04 | 0.05 | 0.05 |
| | Ink composition 1 (acidic dye) | OD value of front surface | 1.73 | 1.74 | 1.75 | 1.74 | 1.74 | 1.73 | 1.73 | 1.75 | 1.73 | 1.73 | 1.72 | 1.71 | 1.72 | 1.74 | 1.74 | 1.73 |
| | | OD value of back surface | 1.64 | 1.63 | 1.61 | 1.64 | 1.63 | 1.62 | 1.60 | 1.64 | 1.63 | 1.63 | 1.61 | 1.62 | 1.63 | 1.63 | 1.62 | 1.62 |
| Coloring property | Fabric 2 (mixed spun fabric containing nylon and polyurethane, mixing ratio 80:20, basis weight 190 g/m²) | OD value difference between front surface and back surface | 0.09 | 0.11 | 0.14 | 0.10 | 0.11 | 0.11 | 0.13 | 0.11 | 0.10 | 0.10 | 0.11 | 0.09 | 0.09 | 0.11 | 0.12 | 0.11 |
| | Ink composition 2 (reactive dye) | OD value of front surface | 1.57 | 1.56 | 1.57 | 1.56 | 1.57 | 1.57 | 1.55 | 1.57 | 1.55 | 1.55 | 1.58 | 1.54 | 1.53 | 1.56 | 1.55 | 1.55 |
| | | OD value of back surface | 1.48 | 1.47 | 1.46 | 1.49 | 1.50 | 1.48 | 1.43 | 1.51 | 1.45 | 1.46 | 1.47 | 1.46 | 1.45 | 1.47 | 1.44 | 1.45 |
| | Fabric 3 (cotton 100%, basis weight 130 g/m²) | OD value difference between front surface and back surface | 0.09 | 0.09 | 0.11 | 0.07 | 0.07 | 0.09 | 0.12 | 0.06 | 0.10 | 0.09 | 0.11 | 0.08 | 0.08 | 0.09 | 0.11 | 0.10 |

**Table 4**

| | | | Comparative Examples | | | | |
|---|---|---|---|---|---|---|---|
| | | | 1 | 2 | 3 | 4 | 5 |
| Solvent | Propylene glycol | | No penetrant liquid | 5 | | | |
| | Glycerin | | | | | | 30 |
| | 1,3-Butanediol | | | | 5 | | |
| | 1,2-Hexanediol | | | | | 5 | |
| | Triethylene glycol monobutyl ether | | | 40 | | 50 | 5 |
| Compound containing lactam structure | 2-Azetidinone | | | | 15 | | |
| | 2-Pyrrolidone | | | | | | |
| | 2-Piperidone | | | | | | |
| | ε-Caprolactam | | | | | | |
| | 4-Ethyl-2-azetidinone | | | | | | |
| | N-Methyl-2-pyrrolidone | | | | | | |
| | 3-Amino-2-piperidone | | | | | | |
| pH-Adjusting agent | Isopropanolamine | | | 0.2 | 0.2 | 0.2 | |
| | Triethanolamine | | | | | | 0.1 |
| Surfactant | Olfine PD002W | | | 0.5 | | | 0.5 |
| | Olfine PD570 (manufactured by Nissin Chemical Industry Co., Ltd.) | | | | 0.6 | 0.4 | |
| | Silface SAG002 (manufactured by Nissin Chemical Industry Co., Ltd.) | | | | 0.6 | | 0.5 |
| | BYK 348 (manufactured by BYK Co., Ltd.) | | | | | 0.4 | |

| Water | | | | balance | balance | balance | balance |
|---|---|---|---|---|---|---|---|
| Coloring property | Ink composition 1 (acidic dye) | OD value of front surface | 1.56 | 1.58 | 1.57 | 1.55 | 1.55 |
| | | OD value of back surface | 1.37 | 1.51 | 1.51 | 1.50 | 1.50 |
| | Fabric 1 (silk 100%, basis weight 60g/m²) | OD value difference between front surface and back surface | 0.19 | 0.07 | 0.06 | 0.05 | 0.05 |
| | Ink composition 1 (acidic dye) | OD value of front surface | 1.74 | 1.73 | 1.72 | 1.72 | 1.71 |
| | Fabric 2 (mixed spun fabric containing nylon and polyurethane, mixing ratio 80:20, basis weight 190 g/m²) | OD value of back surface | 0.74 | 1.26 | 1.44 | 1.26 | 1.62 |
| | | OD value difference between front surface and back surface | 1.00 | 0.47 | 0.28 | 0.46 | 0.09 |
| | Ink composition 2 (reactive dye) | OD value of front surface | 1.60 | 1.56 | 1.55 | 1.54 | 1.44 |
| | | OD value of back surface | 0.98 | 1.47 | 1.44 | 1.46 | 1.40 |
| | Fabric 3 (cotton 100%, basis weight 130g/m²) | OD value difference between front surface and back surface | 0.62 | 0.09 | 0.11 | 0.08 | 0.04 |

### Evaluation of Coloring Property of Front Surface and Evaluation of Coloring Difference between Front Surface and Back Surface

### Sample 1

A cartridge of an inkjet printer PX-G930 (manufactured by Seiko Epson Corporation) was filled with ink composition 1 and the penetrant liquid obtained as described above. Fabric 1 (silk 100%; basis weight 60g/m²) was fed to the printer, and then the fabric was printed using the ink composition at a duty of 100% and using the penetrant liquid at a duty of 100% to apply ink composition 1 and the penetrant liquid onto the front surface of fabric 1. The image resolution was set to 1440 × 720 dpi.

Fabric 1, in which ink composition 1 and the penetrant liquid were applied onto the front surface, was steamed at 100°C for 30 minutes and then washed with an aqueous solution containing 0.2% by mass of Laccol STA (a surfactant manufactured by Meisei Chemical Works, Ltd.) at 55°C for 10 minutes, followed by drying to give sample 1.

### Sample 2

Sample 2 was obtained by the same method as in Example 1, except that fabric 2 (mixed spun, nylon 80% and polyurethane 20%; basis weight 190g/m²) was used instead of fabric 1.

### Sample 3

A cartridge of the inkjet printer PX-G930 (manufactured by Seiko Epson Corporation) was filled with ink composition 2 and the penetrant liquid obtained as described above. Fabric 3 (cotton 100%; basis weight 130g/m²) was fed to the printer, and then the fabric was printed using the ink composition at a duty of 100% and using the penetrant liquid at a duty of 100% to apply ink composition 2 and the penetrant liquid onto the front surface of fabric 3. The image resolution was set to 1440 × 720 dpi.

Fabric 3, in which ink composition 2 and the penetrant liquid were applied onto the front surface, was steamed at 102°C for 10 minutes and then washed with an aqueous solution containing 0.2% by mass of Laccol STA (a surfactant manufactured by Meisei Chemical Works, Ltd.) at 90°C for 10 minutes, followed by drying to give sample 3.

### Evaluation

OD values (optical or coloring densities) of the front surfaces and the back surfaces of the obtained samples were respectively measured using a color measurement instrument (trade name "Gretag Macbeth Spectrolino" manufactured by X-RITE INC.). The coloring property of the front surface and a difference in the coloring property between the front surface and the back surface were evaluated on the basis of the evaluation criteria using the measured OD values.

## Claims

1. Use of a penetrant liquid for ink jet textile printing in combination with an ink composition comprising a dye to provide a printed textile material having a low difference in dye concentration between the front side and the back side of the printed material, wherein the penetrant liquid consists of:
a compound containing a lactam structure;
water;
and optionally one or more further components selected from:
an organic solvent;
a surfactant;
a urea;
a saccharide;
a pH adjusting agent
a chelating agent;
an antiseptic;
an antirust agent;
wherein the content of the compound containing a lactam structure is 20% by mass or more.

2. Use of a penetrant liquid for ink jet textile printing in combination with an ink composition comprising a dye according to Claim 1, wherein
the compound containing a lactam structure includes at least one compound selected from the group consisting of 2-pyrrolidone, 2-azetidinone, 2-piperidone, ε-caprolactam, 4-ethyl-2-azetidinone, N-methyl-2-pyrrolidone, and 3-amino-2-piperidone.

3. Use of a penetrant liquid for ink jet textile printing in combination with an ink composition comprising a dye according to claim 1 or claim 2, wherein
the content of the compound containing a lactam structure is 30 to 50% by mass.

4. Use of a penetrant liquid for ink jet textile printing in combination with an ink composition comprising a dye according to any one of the preceding claims, the penetrant liquid further comprising a nonionic surfactant.

5. Use of a penetrant liquid for ink jet textile printing in combination with an ink composition comprising a dye according to any one of the preceding claims, the penetrant liquid further comprising a silicone-based surfactant.

6. Use of a penetrant liquid for ink jet textile printing in combination with an ink composition comprising a dye according to any one of the preceding claims, the penetrant liquid further comprising at least one organic solvent selected from the group consisting of a glycol ether having a boiling point of 260°C or lower and an alkyl polyol having a boiling point of 260°C or lower, and being substantially free of an organic solvent having a boiling point higher than 260°C.

7. An ink set comprising:
an ink composition containing a dye, and
a penetrant liquid for inkjet textile printing, wherein the penetrant liquid consists of:
a compound containing a lactam structure;
water;
and optionally one or more further components selected from:
an organic solvent;
a surfactant;
a urea;
a saccharide;
a pH adjusting agent
a chelating agent;
an antiseptic;
an antirust agent;
and wherein the content of the compound containing a lactam structure is 20% by mass or more.

8. A textile printing method comprising:
a recording step in which an ink composition comprising a dye is applied onto a front surface of a fabric by an ink jet method; and
a penetrant liquid applying step in which a penetrant liquid is applied onto the front surface or the back surface of the fabric before or after the recording step, wherein the penetrant liquid consists of:
a compound containing a lactam structure;
water;
and optionally one or more further components selected from:
an organic solvent;
a surfactant;
a urea;
a saccharide;
a pH adjusting agent
a chelating agent;
an antiseptic;
an antirust agent;
and wherein the content of the compound containing a lactam structure is 20% by mass or more.

## Patentansprüche

1. Verwendung einer Eindringflüssigkeit für Tintenstrahltextildruck in Kombination mit einer Tintenzusammensetzung, die einen Farbstoff umfasst, um ein bedrucktes Textilmaterial bereitzustellen, das einen geringen Unterschied in Farbstoffkonzentration zwischen der Vorderseite und der Rückseite des bedruckten Materials aufweist, wobei die Eindringflüssigkeit aus Folgendem besteht:
einer Verbindung, die eine Lactamstruktur enthält;
Wasser;
und optional einer oder mehreren weiteren Komponenten, ausgewählt aus:
einem organischen Lösemittel;
einem Tensid;
einem Harnstoff;
einem Saccharid;
einem pH-Wert-Einstellungsmittel;
einem Chelatbildner;
einem Antiseptikum;
einem Rostschutzmittel;
wobei der Gehalt der Verbindung, die eine Lactamstruktur enthält, 20 Masseprozent oder mehr beträgt.

2. Verwendung einer Eindringflüssigkeit für Tintenstrahltextildruck in Kombination mit einer Tintenzusammensetzung, die einen Farbstoff umfasst, nach Anspruch 1, wobei
die Verbindung, die eine Lactamstruktur enthält, mindestens eine Verbindung beinhaltet, die ausgewählt ist aus der Gruppe bestehend aus 2-Pyrrolidon, 2-Azetidinon, 2-Piperidon, ε-Caprolactam, 4-Ethyl-2-azetidinon, N-Methyl-2-pyrrolidon und 3-Amino-2-piperidon.

3. Verwendung einer Eindringflüssigkeit für Tintenstrahltextildruck in Kombination mit einer Tintenzusammensetzung, die einen Farbstoff umfasst, nach Anspruch 1 oder Anspruch 2, wobei
der Gehalt der Verbindung, die eine Lactamstruktur enthält, 30 bis 50 Masseprozent beträgt.

4. Verwendung einer Eindringflüssigkeit für Tintenstrahltextildruck in Kombination mit einer Tintenzusammensetzung, die einen Farbstoff umfasst, nach einem der vorstehenden Ansprüche, wobei die Eindringflüssigkeit weiter ein nichtionisches Tensid umfasst.

5. Verwendung einer Eindringflüssigkeit für Tintenstrahltextildruck in Kombination mit einer Tintenzusammensetzung, die einen Farbstoff umfasst, nach einem der vorstehenden Ansprüche, wobei die Eindringflüssigkeit weiter ein auf Silikon basierendes Tensid umfasst.

6. Verwendung einer Eindringflüssigkeit für Tintenstrahltextildruck in Kombination mit einer Tintenzusammensetzung, die einen Farbstoff umfasst, nach einem der vorstehenden Ansprüche, wobei die Eindringflüssigkeit weiter mindestens ein organisches Lösemittel umfasst, das ausgewählt ist aus der Gruppe bestehend aus einem Glycolether mit einem Siedepunkt von 260°C oder niedriger und einem Alkylpolyol mit einem Siedepunkt von 260°C oder niedriger, und im Wesentlichen frei von einem organischen Lösemittel mit einem Siedepunkt von höher als 260°C ist.

7. Tintensatz, umfassend:
eine Tintenzusammensetzung, die einen Farbstoff enthält, und
eine Eindringflüssigkeit für Tintenstrahltextildruck, wobei die Eindringflüssigkeit aus Folgendem besteht:
einer Verbindung, die eine Lactamstruktur enthält;
Wasser;
und optional einer oder mehreren weiteren Komponenten, ausgewählt aus:
einem organischen Lösemittel;
einem Tensid;
einem Harnstoff;
einem Saccharid;
einem pH-Wert-Einstellungsmittel;
einem Chelatbildner;
einem Antiseptikum;
einem Rostschutzmittel;
und wobei der Gehalt der Verbindung, die eine Lactamstruktur enthält, 20 Masseprozent oder mehr beträgt.

8. Textildruckverfahren, umfassend:
einen Aufzeichnungsschritt, in dem eine Tintenzusammensetzung, die einen Farbstoff umfasst, auf eine Vorderseite eines Stoffs durch ein Tintenstrahlverfahren aufgebracht wird; und
einen Eindringflüssigkeitsaufbringungsschritt, in dem eine Eindringflüssigkeit auf die Vorderseite oder die Rückseite des Stoffs vor oder nach dem Aufzeichnungsschritt aufgebracht wird, wobei die Eindringflüssigkeit aus Folgendem besteht:
einer Verbindung, die eine Lactamstruktur enthält;
Wasser;
und optional einer oder mehreren weiteren Komponenten, ausgewählt aus:
einem organischen Lösemittel;
einem Tensid;
einem Harnstoff;
einem Saccharid;
einem pH-Wert-Einstellungsmittel;
einem Chelatbildner;
einem Antiseptikum;
einem Rostschutzmittel;
und wobei der Gehalt der Verbindung, die eine Lactamstruktur enthält, 20 Masseprozent oder mehr beträgt.

## Revendications

1. Utilisation d'un liquide pénétrant pour impression à jet d'encre sur textile en combinaison avec une composition d'encre comprenant un colorant pour fournir une matière textile imprimée présentant une faible différence dans la concentration de colorant entre le côté avant et le côté arrière de la matière imprimée, dans laquelle le liquide pénétrant consiste dans :
un composé contenant une structure de lactame ;
de l'eau
et facultativement un ou plusieurs composants supplémentaires sélectionnés parmi :
un solvant organique ;
un tensioactif ;
une urée ;
un saccharide ;
un agent d'ajustement de pH ;
un agent chélateur ;
un antiseptique ;
un agent antirouille ;
dans laquelle la teneur du composé contenant une structure de lactame représente 20 % en masse ou moins.

2. Utilisation d'un liquide pénétrant pour impression à jet d'encre sur textile en combinaison avec une composition d'encre comprenant un colorant selon la revendication 1, dans laquelle
le composé contenant une structure de lactame inclut au moins un composé sélectionné parmi le groupe comprenant le 2-pyrrolidone, le 2-azétidinone, le 2-pipéridone, le ε-caprolactame, le 4-éthyle-2-azétidinone, le N-méthyle-2-pyrrolidone, et le 3-amino-2-pipéridone.

3. Utilisation d'un liquide pénétrant pour impression à jet d'encre sur textile en combinaison avec une composition d'encre comprenant un colorant selon la revendication 1 ou la revendication 2, dans laquelle la teneur du composé contenant une structure de lactame représente de 30 à 50 % en masse.

4. Utilisation d'un liquide pénétrant pour impression à jet d'encre sur textile en combinaison avec une composition d'encre comprenant un colorant selon l'une quelconque des revendications précédentes, le liquide pénétrant comprenant en outre un tensioactif non-ionique.

5. Utilisation d'un liquide pénétrant pour impression à jet d'encre sur textile en combinaison avec une composition d'encre comprenant un colorant selon l'une quelconque des revendications précédentes, le liquide pénétrant comprenant en outre un tensioactif à base de silicone.

6. Utilisation d'un liquide pénétrant pour impression à jet d'encre sur textile en combinaison avec une composition d'encre comprenant un colorant selon l'une quelconque des revendications précédentes, le liquide pénétrant comprenant en outre au moins un solvant organique sélectionné parmi le groupe comprenant un éther de glycol présentant un point d'ébullition de 260 °C ou inférieur et un alkyl polyol présentant un point d'ébullition de 260 °C ou inférieur, et étant substantiellement exempt de solvant organique présentant un point d'ébullition supérieur à 260 °C.

7. Jeu d'encres comprenant :
une composition d'encre contenant un colorant, et
un liquide pénétrant pour impression à jet d'encre sur textile, dans lequel le liquide pénétrant consiste dans :
un composé contenant une structure de lactame ;
de l'eau
et facultativement un ou plusieurs composants supplémentaires sélectionnés parmi :
un solvant organique ;
un tensioactif ;
une urée ;
un saccharide ;
un agent d'ajustement de pH ;
un agent chélateur ;
un antiseptique ;
un agent antirouille ;
et dans lequel la teneur du composé contenant une structure de lactame représente 20 % en masse ou moins.

8. Procédé d'impression sur textile comprenant :
une étape d'impression dans laquelle une composition d'encre comprenant un colorant est appliquée sur une surface avant d'un tissu à l'aide d'un procédé à jet d'encre ; et
une étape d'application de liquide pénétrant dans laquelle un liquide pénétrant est appliqué sur la surface avant ou la surface arrière du tissu avant ou après l'étape d'impression, dans lequel le liquide pénétrant consiste dans :
un composé contenant une structure de lactame ;
de l'eau
et facultativement un ou plusieurs composants supplémentaires sélectionnés parmi :
un solvant organique ;
un tensioactif ;
une urée ;
un saccharide ;
un agent d'ajustement de pH ;
un agent chélateur ;
un antiseptique ;
un agent antirouille ;
et dans lequel la teneur du composé contenant une structure de lactame représente 20 % en masse ou moins.
